Europäisches Patentamt

(19) European Patent Office

Office européen des brevets

(11) Numéro de publication : **0 028 979**
**B1**

(12) # FASCICULE DE BREVET EUROPÉEN

(45) Date de publication du fascicule du brevet :
13.07.83

(51) Int. Cl.³ : **F 16 C  7/02**

(21) Numéro de dépôt : **80401588.1**

(22) Date de dépôt : **06.11.80**

(54) **Bielle ou objet analogue.**

(30) Priorité : **08.11.79 FR 7928013**

(43) Date de publication de la demande :
**20.05.81 Bulletin 81/20**

(45) Mention de la délivrance du brevet :
**13.07.83 Bulletin 83/28**

(84) Etats contractants désignés :
**AT BE CH DE GB IT LI LU NL SE**

(56) Documents cités :
**US A 3 970 495**

(73) Titulaire : **SKF  COMPAGNIE  D'APPLICATIONS MECANIQUES-ADR**
**Route de Roybon**
**F-26240 Saint-Vallier-s/Rhône (FR)**

(72) Inventeur : **Monteillet, Denis**
**Quartier de Villeneuve de Vals**
**F-26550 Saint Barthelemy de Vals (FR)**

(74) Mandataire : **Boivin, Claude**
**9, rue Edouard-Charton**
**F-78000 Versailles (FR)**

Jouve, 18, rue St-Denis, 75001 Paris, France

## Bielle ou objet analogue

La présente invention concerne les bielles, ou objets analogues, à extrémités rétreintes, qui comportent un corps creux réalisé en fibres de carbone et une âme en fibres qui sert de sous-couche aux fibres du corps.

Les bielles sont le plus souvent réalisées en disposant une série de rubans en une matière fibreuse imprégnée de résine sur un mandrin et éventuellement sur des embouts de liaison placés aux extrémités du mandrin, et en procédant ensuite à la cuisson de la résine.

Jusqu'à présent, le mandrin était réalisé soit en une matière thermo-fusible, auquel cas il se désagrégeait ou fondait lors de la cuisson de la résine, soit en une matière soluble et était alors éliminé par dissolution, après cette cuisson.

Le brevet français 2 309 453 décrit un élément tubulaire comportant un corps creux en fibres de carbone et une âme qui sert de sous-couche aux fibres. L'âme est obtenue en enroulant des fibres sur un mandrin cylindrique de façon à former un tube et en découpant ce tube à la longueur voulue. Lorsque l'élément tubulaire présente des extrémités rétreintes, comme c'est le cas pour une bielle, il est nécessaire de prévoir, à chacune de ces extrémités, un élément terminal muni d'un prolongement cylindrique à paroi mince qu'on adapte dans le tube pour constituer l'âme ; cet élément ne peut être fabriqué que par moulage sur un mandrin perdu.

La présente invention a pour objet une bielle ou objet analogue du type ci-dessus, mais dont l'âme ne comporte pas d'éléments terminaux et dont les qualités mécaniques sont notablement supérieures à celles des bielles usuelles.

La bielle selon l'invention est caractérisée en ce que l'âme est formée de deux éléments cylindriques en fibres de verre qui s'étendent chacun sur sensiblement une moitié de la longueur de la bielle et sont partiellement emmanchés l'un dans l'autre, l'extrémité libre de chaque élément étant rétreinte.

Il est possible par moulage sur un manchon réutilisable de réaliser des éléments avec une extrémité rétreinte et ainsi, en emmanchant deux éléments l'un dans l'autre, une âme dont les deux extrémités sont rétreintes. Par ailleurs, le verre ayant un coefficient de dilatation positif alors que le carbone a un coefficient de dilatation négatif, l'âme en fibres de verre se dilate lors du chauffage nécessaire à la polymérisation de la résine imprégnant les fibres en tendant les fibres de carbone. Lors du refroidissement qui suit, la résine ayant durci, les fibres de carbone restent tendues. L'âme permet donc d'optimiser la pré-tension des fibres de carbone. Par ailleurs, elle donne une meilleure tenue de la bielle aux impacts, par exemple à ceux dus à des projectiles.

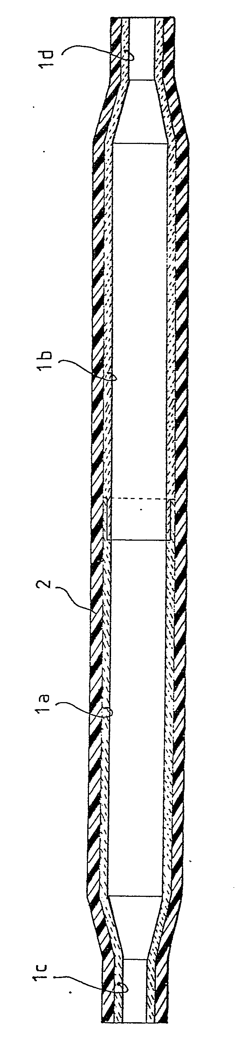

On a décrit ci-après un mode de réalisation de la bielle selon l'invention avec référence à la Figure unique du dessin annexé qui est une vue en coupe schématique de cette bielle.

Telle qu'elle est représentée au dessin, la bielle selon l'invention comprend une âme en fibres de verre qui est formée de deux éléments cylindriques 1a et 1b emmanchés sur une faible distance l'un dans l'autre et s'étendant chacun sur pratiquement la moitié de la longueur de la bielle. Chacun de ces éléments est muni d'une extrémité rétreinte 1c ou 1d et obtenu séparément par moulage sur un moule, par exemple en alliage léger.

L'âme 1a-1b sert de support à un corps fibreux 2 obtenu en disposant longitudinalement sur l'âme, une série de rubans en fibres de carbone imprégnées de résine et en procédant ensuite à la cuisson de cette résine.

## Revendication

Bielle ou objet analogue, à extrémités rétreintes, comportant un corps creux (2) en fibres de carbone et une âme en fibres qui sert de sous-couche aux fibres dudit corps, caractérisée en ce que l'âme est formée de deux éléments cylindriques (1a et 1b) en fibres de verre qui s'étendent chacun sensiblement sur une moitié de la longueur de la bielle et sont partiellement emmanchés l'un dans l'autre, l'extrémité libre de chaque élément étant rétreinte (1c et 1d).

## Claim

Connecting rod or similar object, having tapered ends, comprising a hollow body (2) made of carbon fibres and a core made of fibres which serves as sub-layer for the fibres of said body, characterized in that the core is formed by two cylindrical elements (1a and 1b) made of glass fibres which each extend substantially over half the length of the connecting rod and are partially fitted in each other, the free end of each element being tapered (1c and 1d).

## Anspruch

Pleuelstange od. dgl. mit verjüngten Enden, bestehend aus einem Hohlkörper (2) aus Kohlenstoffasern und einer Seele aus Fasern, die dazu dient, die Fasern des Körpers zu unterstützen, dadurch gekennzeichnet, daß die Seele aus zwei zylindrischen Elementen (1a und 1b) aus Glasfasern gebildet ist, die sich jeweils im wesentlichen über die halbe Länge der Pleuelstange erstrecken und die teilweise ineinander gesteckt sind, wobei das freie Ende (1c und 1d) eines jeden Elementes verjüngt ist.